# DEMANDE DE BREVET EUROPEEN

(11) **EP 4 375 899 A1**
(43) Date de publication de la demande: **29.05.2024**
(21) Numéro de dépôt: 23307018.4
(22) Date de dépôt: 21.11.2023
(51) Int. Cl.: G06Q 10/0631

(54) **PROCEDE ET DISPOSITIF DE RECOMMANDATION D'ACTIVITES A AU MOINS UN UTILISATEUR**

(30) Priorité: 25.11.2022 FR 2212340
(71) Demandeur: Orange, 92130 Issy-les-Moulineaux (FR)
(72) Inventeur: GUIONNET, Chantal, 92326 CHATILLON CEDEX (FR); GUIONNET, Alain, 92326 CHATILLON CEDEX (FR)
(74) Mandataire: Cabinet Beau de Loménie

(57) **Abrégé**

La présente invention concerne un procédé et un dispositif (APP) de recommandation d'activités à au moins un utilisateur (USR_1). En particulier, le procédé proposé est caractérisé en ce qu'une détection (S20) d'au moins une première activité (ACT_A) en cours de réalisation dans un premier lieu (LOC_A) à partir de données mesurées (DATA_A) par au moins un capteur (SENS_A) déclenche :
- un envoi (S70), à au moins un terminal (UE_1) dudit au moins un utilisateur (USR_1) situé dans un deuxième lieu (LOC_B), d'au moins une recommandation d'activités (REC_1) générée (S60) en fonction de : ladite au moins une première activité (ACT_A) ; et d'au moins un lien (LNK) entre ledit au moins un utilisateur (USR_1) et ladite au moins une première activité (ACT_A).

## Description

### Domaine technique

La présente invention se rapporte au domaine du traitement de l'information. Plus particulièrement, la présente invention concerne un procédé et un dispositif de recommandation d'activités à au moins un utilisateur, ainsi qu'un système, un programme d'ordinateur, et un support d'informations associés. La présente invention trouve une application particulièrement avantageuse, bien que nullement limitative, pour la mise en oeuvre de systèmes d'aide à la décision.

### Technique antérieure

Dans l'état actuel de la technique, il est connu de diffuser à un ensemble d'utilisateurs une information indiquant qu'une activité est en cours de réalisation par des personnes situées dans un lieu distant. Par exemple, la solution proposée dans le document Florea et al., « Deep Learning for Group Activity Recognition in Smart Office Environments », Future Internet, 2020, permet de diffuser une information indiquant que plusieurs personnes participent à une réunion dans une certaine salle de conférence.

Néanmoins, une telle information est diffusée à titre indicatif uniquement. Dans ce cas, chacun des utilisateurs prend connaissance de l'activité, puis l'analyse pour déterminer s'il est nécessaire ou non de réaliser une action en conséquence. Or, lorsqu'une activité en cours est diffusée à un large ensemble d'utilisateurs et requiert de réaliser une action, il est fréquent qu'un certain nombre d'utilisateurs prennent de mauvaises décisions. En reprenant l'exemple ci-dessus, un utilisateur pourrait considérer à tort que sa présence à la réunion n'est pas nécessaire et, en fait, manquer une réunion à laquelle sa participation était attendue. Il apparaît ainsi primordial d'aider en temps-réel des utilisateurs dans leur prise de décision.

Dans le contexte particulier d'aide à la décision, divers systèmes existants proposent pour un utilisateur des recommandations établies sur la base d'actions précédemment réalisées par l'utilisateur ou d'autres personnes. Notamment, il est commun pour les plateformes de vidéo à la demande de recommander aux utilisateurs une liste de films à regarder. Typiquement, de telles recommandations sont générées à partir de l'historique de visionnage de l'utilisateur, et des historiques de visionnages d'autres utilisateurs de la plateforme.

Toutefois, la pertinence des recommandations produites par les systèmes d'aide à la décision existants n'est pas pleinement satisfaisante, notamment pour les raisons suivantes. En effet, les recommandations proposées à un utilisateur par ces systèmes sont générées uniquement à partir d'actions passées. Pour cette raison, les recommandations générées sont fréquemment obsolètes et peu pertinentes pour l'utilisateur. De surcroît, les systèmes existants ne font que reproduire des actions déjà effectuées par un ou plusieurs utilisateurs. Ainsi, si un utilisateur est confronté à une situation inédite, les recommandations proposées seront sans intérêt et ne permettront pas d'aider l'utilisateur dans sa prise de décision de manière appropriée.

Il existe par conséquent un besoin pour un système d'aide à la décision permettant de fournir en temps-réel des recommandations à jour et pertinentes pour un utilisateur.

### Exposé de l'invention

La présente invention a pour objectif de remédier à tout ou partie des inconvénients de l'art antérieur, notamment ceux exposés précédemment.

Selon un aspect de l'invention, il est proposé un procédé de recommandation d'activités à au moins un utilisateur, dans lequel une détection d'au moins une première activité en cours de réalisation dans un premier lieu à partir de données mesurées par au moins un capteur déclenche :
- un envoi (via un réseau de communication), à au moins un terminal dudit au moins un utilisateur situé dans un deuxième lieu, d'au moins une recommandation d'activités générée en fonction de : ladite au moins une première activité ; et d'au moins un lien entre ledit au moins un utilisateur et ladite au moins une première activité.

La présente invention propose de fournir à un utilisateur une recommandation d'activités en fonction d'une activité détectée dans un lieu distant. En particulier, il convient de souligner que la détection de l'activité réalisée dans le lieu distant déclenche la génération et l'envoi de la recommandation, ce qui permet de fournir en temps-réel une recommandation à l'utilisateur. En outre, la recommandation proposée à l'utilisateur est générée à la fois en fonction de :
l'activité détectée en cours de réalisation ; et du lien entre l'utilisateur et l'activité détectée, ce qui permet d'obtenir une recommandation à jour et personnalisée pour l'utilisateur.

Ainsi, la présente invention permet de fournir en temps-réel des recommandations d'activités à jour et personnalisées pour un utilisateur en tenant compte d'activités en cours de réalisation dans un lieu distant.

Notamment, la présente invention trouve une application avantageuse pour la mise en oeuvre de système d'aide à la décision en temps-réel, par exemple permettant une optimisation des ressources matérielles (e.g. les salles de réunion d'un bâtiment) ou temporelles (e.g. l'emploi du temps d'un utilisateur).

Selon un mode de réalisation, une dite recommandation d'activités est envoyée uniquement à un utilisateur. En variante, une dite recommandation d'activités est envoyée à une pluralité d'utilisateurs.

Selon un mode de réalisation, une dite première activité est une activité réalisée par une ou plusieurs personnes situées dans le premier lieu (e.g. le début d'une présentation). En variante, ladite première activité est une activité associée au premier lieu, et ainsi à un changement dans le premier lieu (e.g. lancement d'un diaporama).

Selon un mode de réalisation, ladite au moins une recommandation d'activités est générée en outre en fonction d'une deuxième activité détectée en cours de réalisation par ledit au moins un utilisateur.

Selon ce mode de réalisation, l'activité d'un utilisateur est détectée, puis utilisée pour générer la recommandation d'activités envoyée à l'utilisateur. De la sorte, ce mode de réalisation permet d'adapter dynamiquement les recommandations d'activités fournies à un utilisateur en fonction de sa situation actuelle. Ainsi, ce mode de réalisation contribue à améliorer la pertinence des recommandations d'activités proposées à l'utilisateur.

Selon un mode de réalisation, ledit au moins un lien (entre ledit au moins un utilisateur et ladite au moins une première activité) comprend un lien dit fixe entre ledit au moins utilisateur et au moins une personne associée à ladite au moins une première activité, le lien fixe étant enregistré dans une base données et étant obtenu à partir d'un identifiant dudit au moins un utilisateur et d'un identifiant de ladite au moins une personne (associée à ladite au moins une première activité).

Ce mode de réalisation est avantageux en ce qu'il permet de générer des recommandations d'activités en fonction de relations interpersonnelles définies dans une base de données. Plus généralement, ce mode de réalisation permet de personnaliser les recommandations fournies aux utilisateurs.

Selon un mode de réalisation, ledit au moins un lien (entre ledit au moins un utilisateur et ladite au moins une première activité) comprend un lien dit dynamique entre ledit au moins un utilisateur et ladite au moins une première activité, le lien dynamique étant déterminé en fonction dudit au moins un utilisateur et de ladite au moins une première activité.

Ce mode de réalisation permet d'adapter au cours du temps les recommandations d'activités envoyées à un utilisateur en fonction d'un contexte courant et, ainsi, contribue à fournir des recommandations à jour aux utilisateurs.

Selon un mode de réalisation, le procédé comprend en outre un envoi, à un terminal d'un autre utilisateur (distinct dudit au moins un utilisateur), d'une autre recommandation d'activités générée en fonction de : ladite au moins une recommandation d'activités (envoyée audit au moins un utilisateur) ; et d'un lien entre l'autre utilisateur et ladite au moins une recommandation d'activités.

Dans ce mode de réalisation, la recommandation d'activités faite à un deuxième utilisateur est réalisée en fonction de la recommandation faite à un premier utilisateur et du lien entre ces utilisateurs. Autrement dit, il est proposé ici d'utiliser un mécanisme d'inférence (i.e. de réaction en chaîne) entre les recommandations fournies aux utilisateurs. Ce mode de réalisation permet de coordonner les activités de plusieurs utilisateurs. Ce mode de réalisation est particulièrement avantageux pour optimiser de manière collective la gestion de ressources partagées entre plusieurs utilisateurs (e.g. des salles de réunions).

Selon un mode de réalisation, ladite au moins une recommandation d'activités et une information représentative de ladite au moins une première activité détectée sont envoyées (via un réseau de communication) audit au moins un terminal dudit au moins un utilisateur.

Dans ce mode de réalisation, il est proposé de transmettre à l'utilisateur, en plus de la recommandation, l'activité détectée ayant déclenchée l'émission de cette recommandation. De la sorte, ce mode réalisation permet de contextualiser les recommandations d'activités proposées aux utilisateurs. Ce mode de réalisation permet ainsi de motiver l'envoi de recommandations auprès des utilisateurs et contribue à améliorer la pertinence de celles-ci pour les utilisateurs.

Selon un mode de réalisation, ladite au moins une recommandation d'activités est générée par un réseau de neurones.

Ce mode de réalisation permet d'optimiser de manière automatique la génération des recommandations à partir de données d'entrainement ou d'apprentissage en vue d'améliorer la pertinence des recommandations fournies aux utilisateurs. Autrement dit, ce mode de réalisation permet d'apprendre automatiquement à générer des recommandations pertinentes pour les utilisateurs.

Selon un mode de réalisation, le procédé comprend une mise à jour de paramètres (e.g. des poids) du réseau de neurones à partir d'une donnée indiquant si ledit au moins un utilisateur a suivi ou non ladite au moins une recommandation d'activités.

Selon ce mode de réalisation, le réseau de neurones est optimisé au cours du temps (i.e. entrainement supervisé en ligne) en tenant compte de la pertinence des recommandations faites à un utilisateur, c'est-à-dire de l'acceptation ou non de celles-ci par l'utilisateur. Ainsi, ce mode de réalisation est avantageux en ce qu'il permet de d'améliorer, au cours du temps et manière propre à un utilisateur, la pertinence des recommandations fournies à celui-ci.

Selon un mode de réalisation, ladite au moins une donnée est obtenue en déterminant si une troisième activité détectée en cours de réalisation par ledit au moins un utilisateur correspond à ladite au moins une recommandation d'activités préalablement envoyée.

En variante, ladite au moins une donnée peut être obtenue en recevant un message en provenance dudit au moins un terminal dudit au moins un utilisateur, le message indiquant si ledit au moins un utilisateur a suivi ou non ladite au moins une recommandation d'activités.

Selon un mode de réalisation, le premier lieu est une salle de réunion équipée dudit au moins un capteur.

Ce mode de réalisation permet de fournir en temps-réel des recommandations d'activités propres au déroulement d'une réunion ou d'une présentation pour des utilisateurs distants.

Selon un mode de réalisation, le procédé comprend une obtention desdites données mesurées par ledit au moins un capteur, lesdites données mesurées étant utilisées pour détecter ladite au moins une première activité.

Ce mode de réalisation permet d'obtenir les données issues de capteurs permettant la détection des activités et, ainsi, d'adapter la détection des activités en fonction de différents scénarios.

Selon un aspect de l'invention, il est proposé un dispositif de recommandation d'activités, comprenant un émetteur configuré pour, sur détection d'au moins une première activité en cours de réalisation dans un premier lieu à partir de données mesurées par au moins un capteur :
- envoyer, à au moins un terminal d'au moins un utilisateur situé dans un deuxième lieu, au moins une recommandation d'activités générée en fonction de : ladite au moins une première activité ; et d'au moins un lien entre ledit au moins un utilisateur et ladite au moins une première activité.

Selon un mode de réalisation, le dispositif de recommandation d'activités met en oeuvre tout ou partie des étapes du procédé de recommandation d'activités conforme à l'invention.

Selon un aspect de l'invention, il est proposé un système comprenant :
- un dispositif de recommandation d'activités conforme à l'invention ; et
- au moins un terminal configuré pour recevoir, en provenance du dispositif de recommandation d'activités, au moins une recommandation d'activités.

Selon un mode de réalisation, le système comprend un ensemble d'au moins un capteur configuré pour capturer des données mesurées et pour communiquer avec ledit dispositif de recommandation d'activités.

Selon un mode de réalisation, un dit ensemble de capteurs comprend au moins un capteur parmi : une caméra ; un microphone ; une sonde réseau ; un capteur de pression ; un capteur de température ; un capteur de profondeur ; et une caméra thermique.

Selon un aspect de l'invention, il est proposé un programme d'ordinateur comportant des instructions pour la mise en oeuvre des étapes d'un procédé conforme à l'invention, lorsque le programme d'ordinateur est exécuté par au moins un processeur ou un ordinateur.

Le programme d'ordinateur peut être formé d'une ou plusieurs sous-parties stockées dans une même mémoire ou dans des mémoires distinctes. Le programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un aspect de l'invention, il est proposé un support d'informations lisible par ordinateur comprenant un programme d'ordinateur conforme à l'invention.

Le support d'informations peut être n'importe quelle entité ou dispositif capable de stocker le programme. Par exemple, le support peut comporter un moyen de stockage, tel qu'une mémoire non-volatile ou ROM, par exemple un CD-ROM ou une ROM de circuit microélectronique, ou encore un moyen d'enregistrement magnétique, par exemple une disquette ou un disque dur. D'autre part, le support de stockage peut être un support transmissible tel qu'un signal électrique ou optique, qui peut être acheminé via un câble électrique ou optique, par radio ou par un réseau de télécommunication ou par un réseau informatique ou par d'autres moyens. Le programme selon l'invention peut être en particulier téléchargé sur un réseau informatique. Alternativement, le support d'informations peut être un circuit intégré dans lequel le programme est incorporé, le circuit étant adapté pour exécuter ou pour être utilisé dans l'exécution du procédé en question.

Le dispositif de recommandation d'activités, le système, le programme d'ordinateur et le support d'informations proposés disposent des avantages décrits ci-dessus en lien avec le procédé de recommandation d'activités proposé.

### Brève description des dessins

D'autres caractéristiques et avantages de la présente invention ressortiront de la description fournie ci-après de modes de réalisation de l'invention. Ces modes de réalisation sont donnés à titre illustratif et sont dépourvus de tout caractère limitatif. La description fournie ci-après est illustrée par les dessins ci-joints :
La figure 1A et la figure 1B représentent respectivement un exemple d'architecture d'un système et des étapes d'un procédé de recommandation d'activités selon un mode de réalisation de l'invention ;
La figure 2A et la figure 2B représentent respectivement un exemple d'architecture d'un système et des étapes d'un procédé de recommandation d'activités selon un mode de réalisation de l'invention ;
La figure 3A, la figure 3B et la figure 3C représentent des exemples de données obtenues et traitées par un système de recommandation d'activités selon un mode de réalisation de l'invention ;
La figure 4 représente un exemple d'architecture logicielle et matérielle d'un système de recommandation d'activités selon un mode de réalisation de l'invention ; et
La figure 5 représente schématiquement un exemple d'architecture fonctionnelle d'un dispositif de recommandation d'activités selon un mode de réalisation de l'invention.

### Description des modes de réalisation

La présente invention concerne un procédé et un dispositif de recommandation d'activités pour un utilisateur, et un système, un programme d'ordinateur, et un support d'informations associés.

La présente invention s'applique, en particulier, à la mise en oeuvre de systèmes d'aide à la décision. La description suivante de l'invention se référera à ce contexte particulier, qui n'est donné qu'à titre d'exemple illustratif et ne doit pas limiter l'invention.

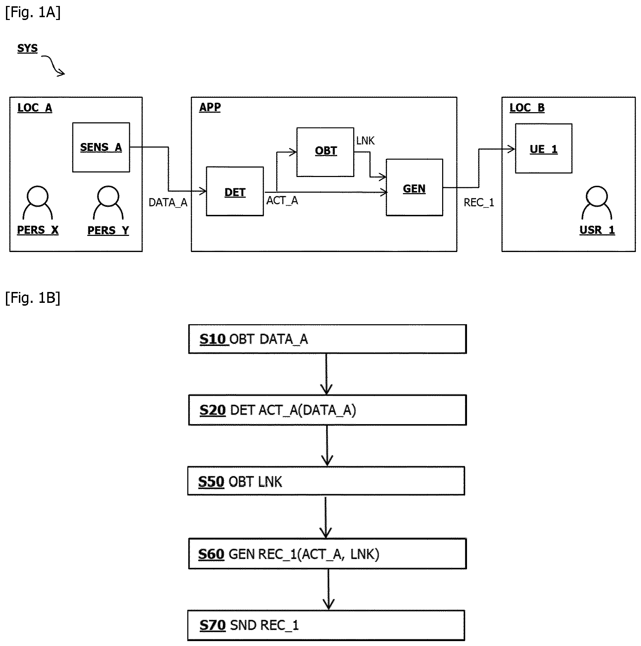

**La** **figure 1A** **et la** **figure 1B** représentent respectivement un exemple d'architecture d'un système et des étapes d'un procédé de recommandation d'activités selon un mode de réalisation de l'invention.

Le système SYS de recommandation d'activités comprend selon le mode de réalisation illustré par la figure 1A : un dispositif APP de recommandation d'activités ; un premier ensemble d'au moins un capteur SENS_A ; et au moins un terminal UE_1.

Il est à noter que le premier ensemble de capteurs SENS_A est situé dans un premier lieu LOC_A où une ou plusieurs personnes PERS_X, PERS_Y sont présentes, et que ledit au moins un terminal UE_1 est associé à au moins un utilisateur USR_1 présent dans un deuxième lieu LOC_B.

Le dispositif APP de recommandation d'activités est configuré pour fournir audit au moins un utilisateur USR_1 au moins une recommandation d'activités REC_1 suite à la détection d'au moins une activité en cours de réalisation dans le premier lieu LOC_A.

Dans le contexte de l'invention, il peut être envisagé des modes de réalisation selon lesquels le premier lieu LOC_A et le deuxième lieu LOC_B sont deux lieux distincts, ou un même lieu. Dans ce dernier cas, le dispositif APP permet notamment de proposer des recommandations d'activités pertinentes pour des personnes en situation de handicap visuel n'étant pas en mesure de constater toutes les activités en cours dans le lieu. Nous considérons ci-après à titre illustratif et non-limitatif que le premier LOC_A et le deuxième lieu LOC_B sont deux lieux distincts.

Nous détaillons ci-après, en référence aux étapes de la figure 1B, le fonctionnement du dispositif proposé APP de recommandation d'activités.

Tel qu'illustré par la figure 1B, et selon un mode de réalisation, le dispositif APP met en oeuvre le procédé proposé de recommandation d'activités comprenant au moins une des étapes S10 à S70 décrites ci-après.

À l'étape S10, le dispositif APP obtient des premières données mesurées DATA_A par le premier ensemble d'au moins un capteur SENS_A.

Nous utilisons ici le terme « données mesurées » pour désigner des données captées par un ou plusieurs capteurs, ou produites à partir de mesures réalisées par un ou plusieurs capteurs. Dans le contexte de l'invention, les données mesurées permettent de détecter des activités de personnes ou de lieu. Typiquement, les données mesurées peuvent être captées par des objets connectés (plus couramment désignés par le terme IoT, acronyme de l'expression anglaise « Internet of Things »).

Selon un mode de réalisation, le premier ensemble de capteurs SENS_A comprend au moins un capteur parmi : une caméra ; un microphone ; une sonde réseau ; un capteur de pression ; un capteur de température ; un capteur de profondeur ; et une caméra thermique.

Par exemple, le premier lieu LOC_A peut être une salle de réunion équipée d'une caméra SENS_A de telle sorte que les premières données mesurées DATA_A comprennent une pluralité d'images acquises de la salle de réunion LOC_A.

Selon un mode de réalisation, le dispositif APP reçoit les premières données mesurées DATA_A en provenance de l'ensemble de capteurs SENS_A via un réseau de communication.

En variante, il pourrait être envisagé des modes de réalisation dans lesquels le dispositif APP lit les premières données mesurées DATA_A sur une mémoire d'un dispositif de stockage partagé avec le premier ensemble de capteurs SENS_A, ou dans lesquels le dispositif APP capture les premières données mesurées DATA_A en utilisant le premier ensemble de capteurs SENS_A intégré au dispositif APP.

À l'étape S20, un détecteur DET du dispositif APP détecte, à partir des premières données mesurées DATA_A, au moins une première activité ACT_A en cours de réalisation dans le premier lieu LOC_A. Autrement dit, le dispositif APP analyse les premières données mesurées DATA_A pour détecter une activité ACT_A.

Dans le contexte de l'invention, une activité détectée par le dispositif APP est caractérisée par un attribut de description et un instant de détection. En outre, le terme « activité » est utilisée pour désigner une activité d'au moins une personne ou une activité d'au moins un lieu.

Par « activité de personnes », nous faisons référence à une action réalisée par au moins une personne. Une activité détectée par le dispositif APP peut par exemple appartenir à l'ensemble d'activités suivant : le début ou la fin d'une présentation par une personne ; une conversation entre personnes ; une entrée ou une sortie d'une personne dans une pièce, un déplacement ou un mouvement d'une personne, une expression d'une personne (e.g. un sourire). En outre, une ou plusieurs personnes peuvent être sujets ou compléments d'une activité détectée, e.g. une personne désigne une autre personne.

Par « activité de lieu », nous faisons ici référence à une activité associée à un lieu, et ainsi à tous changements dans le lieu non associés à une personne. Par exemple, une activité associée à un lieu peut appartenir à l'ensemble d'activités suivant : un début ou une fin de lecture d'un contenu multimédia (e.g. lancement d'un diaporama, démarrage d'une projection d'un film, etc.) ; une ouverture ou une fermeture d'une porte ; un allumage ou une extinction des lumières, etc.

Selon un mode de réalisation, le dispositif APP détecte une activité ACT_A en cours de réalisation par au moins une personne PERS_X-PERS_Y présente dans le premier lieu LOC_1.

Selon un exemple, le dispositif APP détecte à partir d'images DATA_A acquises par une caméra SENS_A qu'une personne PERS_X se lève, se rapproche d'un tableau et débute une présentation. Ainsi, le dispositif APP détecte dans le premier lieu LOC_A une activité ACT_A réalisée par une personne PERS_X par exemple caractérisée par l'attribut de description suivant : « Une présentation débute. ». Selon un autre exemple, le dispositif APP détecte, à partir de données mesurées DATA par un capteur SENS, qu'une lecture d'un contenu multimédia a débuté.

Les détails de mise en oeuvre de l'étape S20 de détection d'activités à partir de données mesurées sont par exemple décrits dans les documents suivants : Florea et al., « Multimodal Deep Learning for Group Activity Recognition in Smart Office Environments », Future Internet, 2020 ; Krishnan et al., « Activity recognition on streaming sensor data », Pervasive and Mobile Computing, Volume 10, 2014.

En outre, le dispositif APP peut identifier des personnes PERS_X-PERS_Y associées à des activités détectées ACT_A. Une telle étape d'identification de personne peut notamment être mise en oeuvre en utilisant des techniques de reconnaissance vocale ou faciale, ou en exploitant une sonde réseau et l'identifiant d'un terminal associé à une personne, etc. Par exemple, le dispositif APP peut, à partir d'images DATA_A acquises par une caméra SENS_A, détecter qu'une personne PERS_X est entrée dans la salle de réunion LOC_A et obtenir un identifiant de cette personne PERS_X.

Il est important de souligner que la détection de ladite au moins une activité ACT_A à l'étape S20 déclenche la mise en oeuvre par le dispositif APP des étapes S50-S70 décrites ci-après. Autrement dit, les étapes S50-S70 sont réalisées si, et seulement si, ladite au moins une activité ACT_A est détectée, et notamment de manière immédiatement consécutive à la détection (i.e. sous une contrainte de temps).

À l'étape S50, un obtenteur OBT du dispositif APP obtient au moins un lien LNK entre ledit au moins un utilisateur USR_1 et ladite au moins une première activité ACT_A détectée.

Dans le contexte de l'invention, un « lien entre un utilisateur et une activité » désigne toute association directe ou indirecte entre une activité détectée et un utilisateur. Plus précisément, nous considérons ci-après qu'un lien entre un utilisateur et une activité est caractérisé par le type d'association entre l'utilisateur et l'activité. Par exemple, un lien entre un utilisateur USR_1 et une activité détectée ACT_A peut appartenir aux types suivants :
- un lien entre l'utilisateur USR_1 et l'activité ACT_A elle-même, e.g. l'utilisateur USR_1 est un employé d'une entreprise dont les actions sont réalisées en fonction d'activités ACT_A détectées ;
- un lien entre l'utilisateur USR_1 et un évènement associé à l'activité ACT_A, e.g. l'utilisateur USR_1 est inscrit comme participant d'une réunion pour laquelle une activité ACT_A est détectée telle qu'un lancement de diaporama ;
- un lien entre l'utilisateur USR_1 et le lieu LOC_A dans lequel l'activité ACT_A est réalisée, e.g. l'utilisateur USR_1 est responsable ou propriétaire du lieu LOC_A dans lequel l'activité ACT_A se déroule ;
- un lien entre l'utilisateur USR_1 et une personne PERS_X associée à l'activité ACT_A, e.g. l'utilisateur USR_1 est un employé de l'entreprise gérée par la personne PERS_X, l'utilisateur USR_1 est un parent de la personne PERS_X réalisant l'activité ACT_A.

En particulier, ledit au moins un lien LNK est obtenu par le dispositif APP à partir d'un identifiant dudit au moins un utilisateur USR_1 et de l'attribut de description de la première activité ACT_A.

Nous reprenons ici l'exemple décrit ci-dessus, le dispositif APP a détecté à l'étape S20 le début d'une présentation ACT_A dans le premier lieu A. Le dispositif APP obtient à l'étape S30 une liste LNK des participants inscrits à cette présentation ACT_A, la liste de participants LNK comprenant un identifiant de l'utilisateur USR_1.

Par ailleurs, le dispositif APP peut également déterminer à l'étape S50 que l'utilisateur USR_1 n'est pas lié à l'activité détectée ACT_A et, ainsi, aucun lien n'est obtenu. Dans ce cas, le procédé se poursuit à l'étape S10 et le dispositif APP continue de surveiller les activées en cours de réalisation dans le premier lieu LOC_A.

À l'étape S60, un générateur GEN du dispositif APP analyse ladite au moins une première activité ACT_A et ledit au moins un lien LNK, puis génère en fonction au moins une recommandation d'activités REC_1.

Au sens de l'invention, « une recommandation d'activités » désigne un message destiné à au moins un utilisateur comprenant une suggestion (proposition) d'au moins une action à réaliser et caractérisée par un attribut de description (e.g. une chaine de caractères). Notamment, une recommandation d'activités peut suggérer à un utilisateur de : réaliser une certaine activité ; effectuer une activité en plus ou à la place d'une première activité, ou encore de ne pas faire une certaine activité.

Poursuivons l'exemple décrit ci-dessus : le début d'une présentation ACT_A a été détecté dans le premier lieu LOC_A ; et l'utilisateur USR_1 est lié à cette présentation ACT_A en tant que participant. Alors, selon cet exemple, la recommandation d'activités REC_1 peut indiquer à l'utilisateur USR_1 de se rendre au premier lieu LOC_A pour assister à la présentation en cours.

Selon un mode de réalisation, la recommandation d'activités REC_1 est générée par un réseau de neurones artificiels. Par exemple, le réseau de neurones peut prendre en entrée un attribut de description de ladite au moins une première activité ACT_A détectée et ledit au moins un lien LNK (e.g. un type de lien), et fournir en sortie une recommandation ACT_A.

En variante, il pourrait être envisagé des modes de réalisation dans lesquels la recommandation d'activités REC_1 est générée en utilisant un ensemble de règles prédéfinies.

Notons que le dispositif APP peut également à l'étape S60 déterminer en fonction de ladite au moins une activité ACT_A détectée et dudit au moins un lient LNK qu'aucune recommandations d'activités n'est nécessaire ou appropriée pour ledit au moins utilisateur USR_1. Dans ce cas, le procédé se poursuit à l'étape S10 et le dispositif APP continue de surveiller les activées en cours de réalisation dans le premier lieu LOC_A.

À l'étape S70, le dispositif APP envoie ladite au moins une recommandation d'activités REC_1 audit au moins un terminal UE_1 dudit au moins un utilisateur USR_1 via un réseau de communication.

Selon un mode de réalisation, ladite au moins une recommandation d'activités REC_1 est envoyée à uniquement à un utilisateur USR_1. En variante, ladite au moins une recommandation d'activités REC_1 peut être envoyée à plusieurs terminaux associés à des utilisateurs distincts. Par ailleurs, une recommandation d'activités peut être envoyée à une pluralité de terminaux d'un même utilisateur (e.g. un ordinateur portable, et un téléphone).

Conformément à l'invention, un terminal peut désigner tout type de terminal tel qu'un ordinateur portable ou fixe, un téléphone, un Smartphone, une tablette, un projecteur, etc.

En particulier, ledit au moins un terminal UE_1 est configuré pour recevoir ladite au moins une recommandation d'activités REC_1 et pour restituer celle-ci, par exemple en utilisant un écran ou un haut-parleur.

Ainsi, le dispositif proposé APP permet de fournir en temps-réel des recommandations d'activités à jour et personnalisées pour un utilisateur en tenant compte d'activités en cours de réalisation dans un lieu distant.

Il convient de souligner que la détection de l'activité réalisée dans le lieu distant déclenche la génération et l'envoi de la recommandation, qui est ainsi fournie en temps-réel à l'utilisateur. En outre, la recommandation proposée à l'utilisateur est générée à la fois en fonction de l'activité en cours détectée et du lien entre l'utilisateur et l'activité détectée, ce qui permet d'obtenir une recommandation à jour et personnalisée pour l'utilisateur.

À titre d'exemple, le dispositif proposé APP peut être utilisé pour mettre un oeuvre un système d'aide à la décision permettant d'optimiser les ressources matérielles (e.g. les salles de réunion d'une entreprise) ou temporelles (e.g. l'emploi du temps d'un utilisateur).

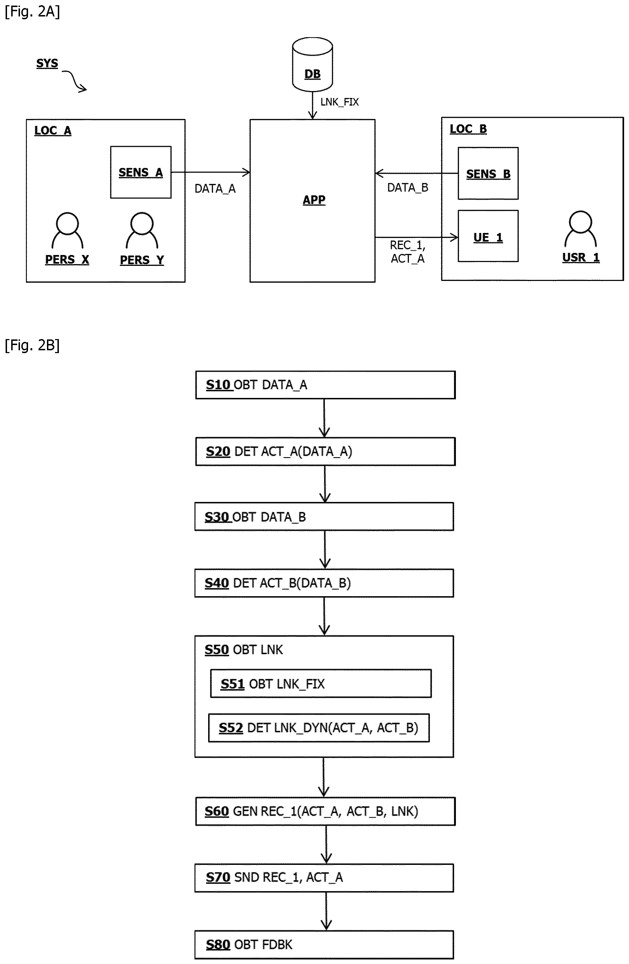

Nous détaillons ci-après, en référence aux figures 2A et 2B, d'autres modes de réalisation de l'invention dans lesquels le dispositif APP met en oeuvre des étapes et fonctionnalités supplémentaires.

**La** **figure 2A** **et la** **figure 2B** représentent respectivement un exemple d'architecture d'un système et des étapes d'un procédé de recommandation d'activités selon un mode de réalisation de l'invention.

En particulier, ces figures illustrent un mode de réalisation dans lequel le dispositif APP introduit ci-dessus envoie à un utilisateur une recommandation d'activités en fonction de l'activité courante de l'utilisateur.

À cet effet, le système SYS comprend selon ce mode de réalisation un deuxième ensemble d'au moins un capteur SENS_B situé dans le deuxième lieu LOC_B. Cet ensemble SENS_B peut comprendre au moins un capteur parmi : une caméra ; un microphone ; une sonde réseau ; un capteur de pression ; un capteur de température ; un capteur de profondeur ; et une caméra thermique.

Nous détaillons ci-après, en référence aux étapes de la figure 2B, le fonctionnement du dispositif proposé APP selon ce mode de réalisation.

Tel qu'illustré par la figure 2B, et selon ce mode de réalisation, le dispositif APP met en oeuvre le procédé proposé de recommandation d'activités comprenant au moins une des étapes S10 à S80 décrites ci-après.

Aux étapes S10 et S20, le dispositif APP obtient des premières données mesurées DATA_A par le premier ensemble de capteurs SENS_A et détecte au moins une première activité ACT_A en cours de réalisation dans le premier lieu LOC_A. La mise en oeuvre des étapes S10-S20 par le dispositif APP est identique à celle décrite en référence aux figures 1A et 1B.

Aux étapes S30 et S40, le dispositif APP obtient des deuxièmes données mesurées DATA_B par le deuxième ensemble de capteurs SENS_A et détecte, à partir de celles-ci, au moins une deuxième activité ACT_B en cours de réalisation par ledit au moins un utilisateur USR_1.

La mise en oeuvre des étapes S30-S40 est notamment analogue à la mise en oeuvre des étapes S10-S20.

Il convient de souligner que les étapes S10-S20 et S30-S40 peuvent être réalisées en parallèle (de manière concomitante ou simultanée), ou séquentiellement (dans un ordre quelconque). Par exemple, l'activité ACT_B d'un utilisateur USR_1 peut être détectée avant l'activité ACT_A en cours de réalisation dans le premier LOC_A, ou inversement.

À l'étape S50, le dispositif APP obtient au moins un lien LNK entre ledit au moins un utilisateur USR_1 et ladite au moins une première activité ACT_A détectée.

À cet effet, selon le mode de réalisation illustré par la figure 2B, le dispositif APP met en oeuvre au moins une des étapes S51 et S52.

À l'étape S51, le dispositif APP obtient un lien dit fixe LNK_FIX entre ledit au moins un utilisateur USR_1 et au moins une personne PERS_X-PERS_Y associée à ladite au moins une première activité ACT_A.

Tel qu'illustré par la figure 2A, le lien fixe LNK_FIX est enregistré dans une base de données DB. Le lien fixe LNK_FIX peut ainsi être obtenu à partir d'un identifiant dudit au moins un utilisateur USR_1 et d'un identifiant de ladite au moins une personne PERS_X-PERS_Y.

Par exemple, un utilisateur USR_1 et une personne PERS_X peuvent être liés par le fait d'appartenir à une même entreprise, ou d'être inscrits à un même évènement tel qu'une réunion.

À l'étape S52, le dispositif APP détermine au moins un lien dit dynamique LNK_DYN entre ledit au moins un utilisateur USR_1 et ladite au moins une première activité ACT_A détectée.

En particulier, le lien dynamique LNK_DYN est déterminé en fonction dudit au moins un utilisateur USR_1 et de ladite au moins une première activité ACT_A à partir d'un ensemble de règles de décision.

Notamment, Le lien dynamique peut être établi entre ledit au moins un utilisateur USR_1 et le premier lieu LOC_A dans lequel la première activité ACT_A est réalisée.

Supposons que la première activité ACT_A est détectée dans le premier lieu LOC_A et que le premier lieu LOC_A est sous la responsabilité de l'utilisateur USR_1. Alors, le dispositif APP peut déterminer que l'utilisateur USR_1 est lié par sa responsabilité à la première activité ACT_A.

En variante, le lien dynamique LNK_DYN peut être établi entre ledit au moins un utilisateur USR_1 et au moins une personne PERS_X-PERS_Y associée à la première activité ACT_A.

Par exemple, si la première activité ACT_A détectée dans le premier lieu LOC_A est identique à la deuxième activité ACT_B en cours de réalisation par l'utilisateur USR_1 dans le deuxième lieu LOC_B. Alors, le dispositif APP peut déterminer que l'utilisateur USR_1 et les personnes PERS_X-PERS_Y sont liées par le fait de réaliser la même activité.

Ainsi, selon ce mode de réalisation, ledit au moins un lien LNK comprend le lien fixe LNK_FIX et/ou le lien dynamique LNK_DYN.

À l'étape S60, le dispositif APP génère au moins une recommandation d'activités REC_1 en fonction de ladite au moins une première activité ACT_A, dudit au moins un lien LNK et de ladite au moins une deuxième activité ACT_B.

Tel que mentionné précédemment, selon ce mode de réalisation, le dispositif proposé APP utilise l'activité en cours de réalisation par un utilisateur pour générer une recommandation d'activités. Ainsi, les recommandations d'activités fournies à un utilisateur sont adaptées dynamiquement à sa situation actuelle.

Selon un mode de réalisation, ladite au moins une recommandation REC_1 est générée par un réseau de neurones prenant en entrée : un attribut de description de ladite au moins une première activité ACT_A ; un attribut de description de ladite au moins une deuxième activité ACT_B ; et ledit au moins un lien LNK.

À l'étape S70, le dispositif APP envoie, audit au moins un terminal UE_1, ladite au moins une recommandation d'activités REC_1 ainsi qu'une information représentative (e.g. un attribut de description) de ladite au moins une activité détectée ACT_A.

Il est proposé ici d'envoyer à l'utilisateur USR_1 à la fois la recommandation REC_1 et l'activité détectée ACT_A ayant déclenchée cette recommandation REC_1. Cela permet de contextualiser la recommandation REC_1 et donc de motiver l'envoi de cette recommandation REC_1 à l'utilisateur USR_1.

À l'étape S80, le dispositif APP obtient au moins une donnée FDBK indiquant si ledit au moins un utilisateur a suivi ou non ladite au moins une recommandation d'activités.

Selon un mode de réalisation, le dispositif APP obtient ladite au moins une donnée FDBK en détectant, à partir de deuxièmes données mesurées DATA_B, si l'utilisateur USR_1 a modifié son activité pour suivre la recommandation REC_1 qui lui a été envoyée. Autrement dit, selon ce mode de réalisation, le dispositif APP vérifie si une activité détectée en cours de réalisation par l'utilisateur USR_1 correspond ou non à une recommandation d'activités REC_1 préalablement envoyée.

En variante, le dispositif APP peut obtenir ladite au moins une donnée FDBK en recevant un message du terminal UE_1 indiquant si l'utilisateur USR_1 a suivi ou non la recommandation d'activités REC_1. Il peut par exemple s'agir d'un message émis suite à une réponse de l'utilisateur USR_1 (acceptation ou non de la recommandation) obtenue via une interface du terminal UE_1.

Selon un mode de réalisation, le dispositif APP met à jour, à partir de ladite au moins une donnée FDBK obtenue, des paramètres (e.g. des poids) du réseau de neurones utilisé pour générer les recommandations d'activités. Ainsi, le réseau de neurones est optimisé au cours du temps en tenant compte de la pertinence des recommandations faites à un utilisateur.

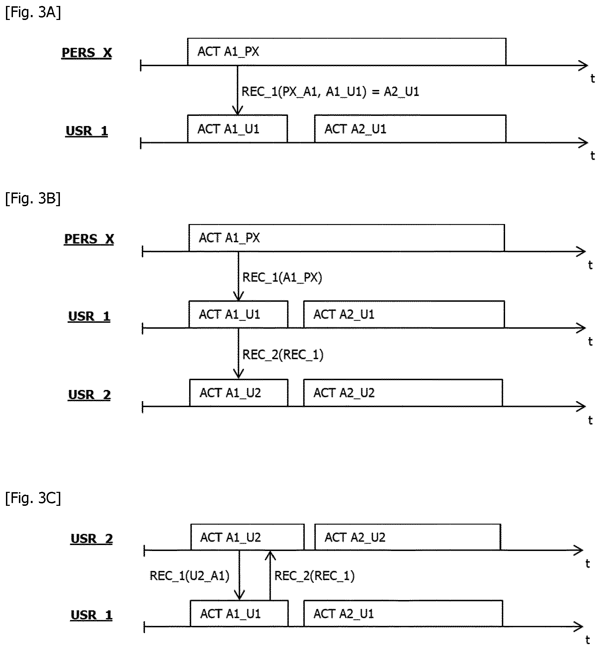

Il est à noter que le procédé proposé de recommandation d'activités peut comprendre une ou plusieurs itérations de chacune de ces étapes. Notamment, nous décrivons ci-après, en référence aux figures 3A-3C, des modes de réalisation selon lesquels le dispositif APP, suite à la détection d'une activité ACT_A, génère et envoie une pluralité de recommandations d'activités pour plusieurs utilisateurs.

**La** **figure 3A****, la** **figure 3B** **et la** **figure 3C** représentent des exemples de données obtenues et traitées par un système de recommandation d'activités selon un mode de réalisation de l'invention. Plus précisément, ces figures illustrent au cours du temps des activités réalisées par plusieurs utilisateurs ou personnes ainsi que des recommandations d'activités qui leur sont fournies.

Aussi, nous décrivons ci-dessous, en référence aux figures 3A, 3B et 3C, trois modes de réalisation des étapes S60 et S70, concernant la génération et l'envoi de recommandations d'activités à des utilisateurs.

Selon un premier mode de réalisation, illustré par la figure 3A, le dispositif APP envoie à un utilisateur USR_1 une recommandation d'activités REC_1 générée en fonction d'une activité détectée A1_PX d'une personne PERS_X et de l'activité A1_U1 de l'utilisateur USR_1.

À titre d'exemple, la figure 3A illustre une situation dans laquelle suite à la recommandation d'activités REC_1, l'utilisateur USR_1 interrompt son activité A1_U1 pour réaliser une autre activité A2_U1 tel que recommandé.

Le premier mode de réalisation décrit ici correspond ainsi au fonctionnement du dispositif APP tel que précédemment décrit en référence aux figures 2A et 2B.

De plus, il est également proposé d'autres modes de réalisations de l'invention dans lesquels un mécanisme d'interférence (i.e. de réaction en chaîne) entre les recommandations fournies aux utilisateurs est utilisé. Ces modes de réalisations sont notamment illustrés par les figures 3B et 3C.

Selon un deuxième mode de réalisation, illustré par la figure 3B, le dispositif APP envoie à un premier utilisateur USR_1 une recommandation d'activités REC_1 générée en fonction de d'une activité détectée A1_PX. De plus, le dispositif APP envoie à un deuxième utilisateur USR_2 une recommandation d'activités REC_2 générée en fonction de la recommandation d'activités REC_1 envoyée au premier utilisateur USR_1.

Plus particulièrement, la recommandation d'activités REC_2 est générée également en fonction d'un lien entre le deuxième utilisateur USR_2 et ladite au moins une recommandation d'activités REC_1. Un tel lien peut être obtenu par le dispositif APP de manière similaire à l'étape S50 décrite ci-dessus. Par exemple, le lien peut être obtenu à partir d'identifiants des utilisateurs USR_1 et USR_2 et de l'attribut de description de la recommandation REC_1.

Il pourrait également être envisagé de générer la recommandation REC_1 en fonction de l'activité courante A1_U1 du premier utilisateur USR1 et de générer la recommandation REC_2 en fonction de l'activité courante A1_U2 du deuxième utilisateur USR2.

La figure 3B illustre une situation dans laquelle suite aux recommandations d'activités REC_1 et REC_2, les utilisateurs USR_1 et USR_2 réalisent respectivement des activités A2_U1 et A2_U2.

En fait, il est proposé dans ce deuxième mode de réalisation de tenir compte de la recommandation d'activités fournie à un utilisateur pour influencer l'activité d'un autre utilisateur.

Par exemple, supposons qu'une recommandation REC_1 est envoyée à un utilisateur USR_1 lui indiquant de se rendre dans une salle de réunion LOC_B pour assister à une réunion d'avancement de projet qui commence ACT_A. En outre, l'utilisateur USR_1 travaille sur ce projet avec un autre utilisateur USR_2. Alors, selon ce mode de réalisation, le dispositif APP envoie également une recommandation REC_2 à l'utilisateur USR_2 pour lui suggérer de participer à la réunion ACT_A.

Ce deuxième mode de réalisation permet de coordonner les activités de plusieurs utilisateurs. Le dispositif APP pourrait ainsi être utilisé pour optimiser de manière collective la gestion de ressources partagées entre plusieurs utilisateurs (e.g. des salles de réunions).

Selon un troisième mode de réalisation, illustré par la figure 3C, une personne associée à une activité détectée A1_U2 est un utilisateur USR_2.

Ainsi, selon ce mode de réalisation, le dispositif APP envoie à l'utilisateur USR_1 une recommandation d'activités REC_1 générée suite à la détection de l'activité A1_U2 de l'utilisateur USR_2.

Par ailleurs, le dispositif APP peut également envoyer à l'utilisateur USR_2 une recommandation d'activités REC_2 générée en fonction de la recommandation d'activités REC_1 envoyée au premier utilisateur USR_1, tel que précédemment décrit.

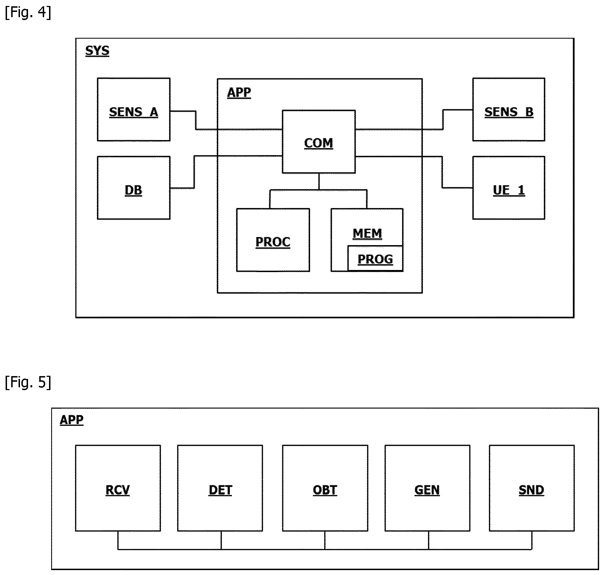

**La** **figure 4** représente un exemple d'architecture logicielle et matérielle d'un système de recommandation d'activités selon un mode de réalisation de l'invention.

Le système SYS de recommandation d'activités comprend, selon un mode de réalisation illustré par la figure 4 au moins un des éléments suivants :
- un dispositif APP de recommandation d'activités ;
- un premier ensemble d'au moins un capteur SENS_A configuré pour capturer des premières données mesurées DATA_A et pour communiquer avec le dispositif APP ;
- un deuxième ensemble d'au moins un capteur SENS_B configuré pour capturer des deuxièmes données mesurées DATA_B et pour communiquer avec le dispositif APP ;
- au moins un terminal utilisateur UE_1 configuré pour communiquer avec le dispositif APP et pour restituer une recommandation d'activités REC_1 ; et
- une base de données DB sur laquelle est enregistré au moins un lien LNK_FIX entre au moins un utilisateur USR_1 et au moins une personne PERS_X, PERS_Y.

Selon un mode de réalisation, le premier SENS_A et le deuxième ensemble de capteurs SENS_B sont compris dans le dispositif APP de recommandation d'activités.

Selon un mode de réalisation, le système SYS est un système d'aide à la décision pour ledit au moins un utilisateur USR_1.

Le dispositif APP de recommandation d'activités comprend, selon un mode de réalisation illustré par la figure 4 : au moins une unité de traitement ou processeur PROC ; et au moins une mémoire MEM.

Plus particulièrement, le dispositif APP dispose, selon un mode de réalisation, de l'architecture matérielle d'un ordinateur. À ce titre, le dispositif APP peut comprendre un processeur PROC, une mémoire vive, une mémoire morte MEM, et une mémoire non volatile. La mémoire MEM associée au dispositif APP constitue un support d'informations conforme à l'invention, lisible par ordinateur et par le processeur PROC, sur lequel est enregistré un programme d'ordinateur PROG conforme à l'invention. Le programme d'ordinateur PROG comporte des instructions pour réaliser des étapes d'un procédé de recommandation d'activités conforme à l'invention, lorsque le programme PROG est exécuté par le processeur PROC.

Le programme d'ordinateur PROG définit des modules fonctionnels et logiciels du dispositif de surveillance APP décrits ci-après en référence à la figure 5.

Tel qu'illustré par la figure 4, selon un mode de réalisation, le dispositif APP dispose d'un dispositif de communication COM configuré pour communiquer via un réseau de communication avec au moins un des éléments suivants : le premier ensemble d'au moins un capteur SENS_A ; le deuxième ensemble d'au moins un capteur SENS_B ; la base de données DB ; et ledit au moins un terminal UE_1. Aucune limitation n'est attachée à la nature des interfaces de communication entre ces dispositifs, qui peuvent être filaires ou non filaires, et peuvent mettre en oeuvre tout protocole connu de l'homme du métier.

**La** **figure 5** représente schématiquement un exemple d'architecture fonctionnelle d'un dispositif de recommandation d'activités selon un mode de réalisation de l'invention.

De manière générale, pour chaque étape (ou opération) d'un procédé de recommandation d'activités conforme à l'invention, le dispositif APP peut comprendre un élément correspondant configuré pour réaliser ladite étape.

En particulier, selon le mode de réalisation illustré par la figure 5, le dispositif APP de recommandation d'activités comprend au moins un des éléments suivants :
- un récepteur RCV configuré pour recevoir des données mesurées DATA_A-DATA_B par au moins un ensemble de capteurs SENS_A-SENS_B ;
- un détecteur DET configuré pour détecter au moins une activité ACT_A-ACT_B à partir de données mesurées DATA_A-DATA_B ;
- un obtenteur OBT configuré pour obtenir au moins un lien LNK entre au moins un utilisateur USR_1 et au moins une activité détectée ACT ;
- un générateur GEN configuré pour générer au moins une recommandation d'activités REC_1 pour au moins un utilisateur USR_1 en fonction d'au moins une activité ACT_A-ACT_B détectée et d'au moins un lien LNK ; et
- un émetteur SND configuré pour envoyer au moins une recommandation d'activités REC_1 à au moins un terminal UE_1.

**Des exemples d'usage** du dispositif proposé APP de recommandation d'activités sont présentés ci-dessous à titre illustratif, ces exemples étant dépourvus de tout caractère limitatif.

Selon un premier exemple de mise en oeuvre, deux utilisateurs USR_1 et USR2 sont inscrits pour participer à une présentation prévue dans une salle de réunion LOC_A. Toutefois, les utilisateurs USR_1 et USR_2 se doutent que la présentation débutera en retard et souhaiteraient en profiter pour faire autre chose. Pour cette raison, l'utilisateur USR_1 reste à son bureau LOC_B pour continuer à travailler ; et l'utilisateur USR_2 prend un café à la cafétéria. Le dispositif APP détecte, à partir de premières données mesurées DATA_A par des capteurs SENS_A installés dans la salle de réunion LOC_A, le lancement d'un diaporama ACT_A et donc que la présentation débute. Sur détection du lancement du diaporama ACT_A, le dispositif APP génère pour les utilisateurs USR_1 et USR_2 une recommandation d'activités REC_1 suggérant de se rendre à la salle de réunion LOC_A. Notamment, pour l'utilisateur USR_1 situé à son bureau, la recommandation d'activités REC_1 est envoyée à son ordinateur UE_1 et, pour l'utilisateur USR_2 situé à la cafétéria, la recommandation d'activités REC_1 est envoyée à son téléphone portable. Ainsi, grâce au dispositif proposé APP, les utilisateurs USR_1 et USR_2 ont pu optimiser leur gestion de temps et se rendre en temps utile à la salle de réunion LOC_A lorsque la présentation commence.

Selon un deuxième exemple de mise en oeuvre, un utilisateur USR_1 est en train de jouer ACT_B seul dans son appartement LOC_A. Le dispositif APP de recommandations d'activités détecte, à partir de deuxièmes données mesurées DATA_B par des capteurs SENS_B situés dans l'appartement LOC_B, l'activité de jeu ACT_B en cours de réalisation par l'utilisateur USR_1. Par ailleurs, le dispositif APP détecte que d'autres personnes PERS_X-PERS_Y commencent à jouer ACT_A dans une salle commune LOC_A de l'immeuble de l'utilisateur USR_1. Le dispositif APP envoie alors une recommandation d'activités REC_1 à un terminal UE_1 de l'utilisateur USR_1. La recommandation d'activités REC_1 indique à l'utilisateur USR_1 que des personnes PERS_X-PERS_Y sont également en train de jouer ACT_A dans la salle commune LOC_A et suggère à l'utilisateur USR_1 de les rejoindre. Ce deuxième exemple illustre notamment le fait que le dispositif proposé APP permet de fournir en temps-réel des recommandations d'activités à jour et personnalisées pour un utilisateur en tenant compte d'activités en cours de réalisation dans un lieu distant. À ce titre, les recommandations fournies par le dispositif proposé APP sont pertinentes pour les utilisateurs.

Selon un troisième exemple de mise en oeuvre, un utilisateur USR_1 participe, à distance depuis son domicile LOC_B, à une présentation réalisée par un intervenant PERS_X dans un amphithéâtre LOC_A. L'utilisateur USR_1 suppose que la présentation va continuer ainsi sans qu'une intervention de sa part soit nécessaire, et décide donc de s'absenter momentanément de son bureau ACT_B. Toutefois, l'intervenant PERS_X interrompt sa présentation et commence à interagir ACT_A avec les participants. Le dispositif APP détecte la nouvelle activité ACT_A de l'intervenant PERS_X ainsi que l'activité ACT_B de l'utilisateur USR_1 et envoie, par conséquent, une recommandation d'activités REC_1 indiquant à l'utilisateur USR_1 de retourner à son bureau. L'utilisateur USR_1 rejoint ainsi rapidement son bureau et peut interagir avec l'intervenant PERS_X comme s'il ne s'était pas absenté.

Il est à noter que l'ordre dans lequel s'enchaînent les étapes d'un procédé conforme à l'invention, notamment en référence aux dessins ci-joints, ne constitue qu'un exemple de réalisation dépourvu de tout caractère limitatif, des variantes étant possibles. En particulier, un procédé conforme à l'invention peut comprendre une ou plusieurs itérations des étapes décrites ci-dessus, notamment en référence aux dessins ci-joints. Par ailleurs, les signes de référence ne sont pas limitatifs de l'étendue de la protection, leur unique fonction étant de faciliter la compréhension des revendications.

Un homme du métier comprendra que les modes de réalisation et variantes décrits ci-dessus ne constituent que des exemples non limitatifs de mise en oeuvre de l'invention. En particulier, l'homme du métier pourra envisager une quelconque adaptation ou combinaison des modes de réalisation et variantes décrits ci-dessus afin de répondre à un besoin bien particulier.

## Revendications

1. Procédé de recommandation d'activités à au moins un utilisateur (USR_1), dans lequel une détection (S20) d'au moins une première activité (ACT_A) en cours de réalisation dans un premier lieu (LOC_A) à partir de données mesurées (DATA_A) par au moins un capteur (SENS_A) déclenche :
- un envoi (S70), à au moins un terminal (UE_1) dudit au moins un utilisateur (USR_1) situé dans un deuxième lieu (LOC_B), d'au moins une recommandation d'activités (REC_1) générée (S60) en fonction de : ladite au moins une première activité (ACT_A) ; et d'au moins un lien (LNK) entre ledit au moins un utilisateur (USR_1) et ladite au moins une première activité (ACT_A).

2. Procédé selon la revendication 1, dans lequel ladite au moins une recommandation d'activités (REC_1) est générée (S60) en outre en fonction d'une deuxième activité détectée (ACT_B) en cours de réalisation par ledit au moins un utilisateur (USR_1).

3. Procédé selon la revendication 1 ou 2, dans lequel ledit au moins un lien (LNK) comprend au moins un lien parmi :
- un lien dit fixe (LNK_FIX) entre ledit au moins utilisateur (USR_1) et au moins une personne (PERS_X, PERS_Y) associée à ladite au moins une première activité (ACT_A), le lien fixe (LNK_FIX) étant enregistré dans une base données (DB) et obtenu (S51) à partir d'un identifiant dudit au moins un utilisateur (USR_1) et d'un identifiant de ladite au moins une personne (PERS_X, PERS_Y) ; et
- un lien dit dynamique (LNK_DYN) entre ledit au moins un utilisateur (USR_1) et ladite au moins une première activité (ACT_A), le lien dynamique (LNK_DYN) étant déterminé (S52) en fonction dudit au moins un utilisateur (USR_1) et de ladite au moins une première activité (ACT_A).

4. Procédé selon l'une des revendications 1 à 3, comprenant en outre un envoi, à un terminal d'un autre utilisateur (USR_2), d'une autre recommandation d'activités (REC_2) générée en fonction de : ladite au moins une recommandation d'activités (REC_1) ; et d'un lien entre l'autre utilisateur (USR_2) et ladite au moins une recommandation d'activités (REC_1).

5. Procédé selon l'une des revendications 1 à 4, dans lequel ladite au moins une recommandation d'activités (REC_1) et une information représentative de ladite au moins une première activité détectée (ACT_A) sont envoyées (S70) audit au moins terminal (UE_1) dudit au moins un utilisateur (USR_1).

6. Procédé selon l'une des revendications 1 à 5, dans lequel ladite au moins une recommandation d'activités (REC_1) est générée (S60) par un réseau de neurones.

7. Procédé selon la revendication 6, comprenant une mise à jour (S80) de paramètres du réseau de neurones à partir d'une donnée (FDBK) indiquant si ledit au moins un utilisateur (USR_1) a suivi ou non ladite au moins une recommandation d'activités (REC_1).

8. Procédé selon l'une des revendications 1 à 7, dans lequel le premier lieu (LOC_A) est une salle de réunion équipée dudit au moins un capteur (SENS_A).

9. Procédé selon l'une des revendications 1 à 8, comprenant une obtention (S10) desdites données mesurées (DATA_A) par ledit au moins un capteur (SENS_A), ces données (DATA_A) étant utilisées pour détecter (S20) ladite au moins une première activité (ACT_A).

10. Programme d'ordinateur (PROG) comprenant des instructions pour la mise en oeuvre des étapes d'un procédé selon l'une des revendications 1 à 9, lorsque ledit programme d'ordinateur (PROG) est exécuté par au moins un processeur (PROC).

11. Support d'informations (MEM) lisible par ordinateur comprenant un programme d'ordinateur (PROG) selon la revendication 10.

12. Dispositif (APP) de recommandation d'activités comprenant un émetteur (SND) configuré pour, sur détection (S20) d'au moins une première activité (ACT_A) en cours de réalisation dans un premier lieu (LOC_A) à partir de données mesurées (DATA_A) par au moins un capteur (SENS_A) :
- envoyer (S70), à au moins un terminal (UE_1) d'au moins un utilisateur (USR_1) situé dans un deuxième lieu (LOC_B), au moins une recommandation d'activités (REC_1) générée (S60) en fonction de : ladite au moins une première activité (ACT_A) ; et d'au moins un lien (LNK) entre ledit au moins un utilisateur (USR_1) et ladite au moins une première activité (ACT_A).

13. Système (SYS) comprenant :
- un dispositif (APP) de recommandation d'activités comprenant un émetteur (SND) configuré pour, sur détection (S20) d'au moins une première activité (ACT_A) en cours de réalisation dans un premier lieu (LOC_A) à partir de données mesurées (DATA_A) par au moins un capteur (SENS_A), envoyer (S70), à au moins un terminal (UE_1) d'au moins un utilisateur (USR_1) situé dans un deuxième lieu (LOC_B), au moins une recommandation d'activités (REC_1) générée (S60) en fonction de : ladite au moins une première activité (ACT_A) ; et d'au moins un lien (LNK) entre ledit au moins un utilisateur (USR_1) et ladite au moins une première activité (ACT_A) ; et
- ledit au moins un terminal (UE_1) configuré pour recevoir, en provenance du dispositif de recommandation d'activités (APP), ladite au moins une recommandation d'activités (REC_1).

14. Système (SYS) selon la revendication 13, comprenant un ensemble d'au moins un capteur (SENS_A) configuré pour capturer des données mesurées (DATA_A) et pour communiquer avec ledit dispositif de recommandation d'activités (APP).

15. Système (SYS) selon la revendication 13 ou 14, dans lequel l'ensemble de capteurs (SENS_A) comprend au moins un capteur parmi : une caméra ; un microphone ; une sonde réseau ; un capteur de pression ; un capteur de température ; un capteur de profondeur ; et une caméra thermique.
